# EUROPEAN PATENT SPECIFICATION

(11) **EP 4 342 706 B1**
(45) Date of publication and mention of the grant of the patent: **25.02.2026**
(21) Application number: 23197804.0
(22) Date of filing: 15.09.2023
(51) Int. Cl.: B60K 11/08, F25D 23/00, B60H 1/00, B60H 1/32

(54) **COOLING SYSTEM FOR A VARIABLE FREQUENCY DRIVE IN A TRANSPORT REFRIGERATION UNIT**
KÜHLSYSTEM FÜR EINEN FREQUENZVARIABLEN ANTRIEB IN EINER TRANSPORTKÜHLEINHEIT
SYSTÈME DE REFROIDISSEMENT POUR UN ENTRAÎNEMENT À FRÉQUENCE VARIABLE DANS UNE UNITÉ DE RÉFRIGÉRATION DE TRANSPORT

(30) Priority: 16.09.2022 US 202263375940 P
(43) Date of publication of application: 27.03.2024
(73) Proprietor: Carrier Corporation, Palm Beach Gardens, FL 33418 (US)
(72) Inventor: VENNE, Samuel, Brewerton, NY (US); JEDIK, Larry, Weedsport, NY (US); KOSAKOWSKI, Chad, Pennellville, NY (US); VERMA, Parmesh, Manlius, NY (US)
(74) Representative: Dehns

(56) References cited:
- EP-A1- 3 415 844
- EP-B1- 2 168 792
- CN-A- 105 658 455
- GB-A- 2 343 161
- US-A1- 2012 031 132
- US-A1- 2018 257 458
- US-A1- 2020 333 058
- US-B1- 6 902 473

## Description

### CROSS-REFERENCE TO RELATED APPLICATION

This patent application claims the benefit of priority of US Provisional Patent Application No. 63/375,940, filed on Sep 16, 2022.

### TECHNICAL FIELD

This invention relates to the field of transport refrigeration units, and more particularly, a cooling system for a variable frequency drive used in a transport refrigeration unit. More generally the invention relates to a cooling system for a variable frequency drive of a vehicle.

### BACKGROUND

A variable frequency drive (VFD) may be implemented in a transport refrigeration unit (TRU) such as trailer refrigeration unit, container refrigeration unit, and truck refrigeration unit, however, the internal air-cooling system of the TRU may be insufficient in high ambient conditions and the VFD may get heated, especially by diesel genset (engine) adding heat in the cabinet of the TRU. This may cause the temperature of the VFD to increase beyond a safe limit, thereby reducing the performance or completely shutting off the VFD, which is highly undesirable. There is, therefore, a need to provide an improved cooling system for the VFD in transport refrigeration units.

US 2020/333058 A discloses a refrigerated container for transportation which includes an engine, a generator driven by the engine and an inverter to convert an electric power. A duct forms an air flow path for air outside the refrigerated container to flow towards the generator. CN 105658455 A discloses an air supply to a space under the engine hood of a vehicle.

### SUMMARY

According to the invention as defined in claim 1, there is provided a cooling system for a variable frequency drive (VFD) of a vehicle, the system comprising: a conduit disposed within the vehicle and extending between an opening provided at a first predefined position on an outer body of the vehicle and the VFD being positioned at a second predefined position within the vehicle, wherein, the opening facilitates inflow of ambient air within the conduit, and the conduit directs the ambient air towards the VFD to enable cooling of the VFD. The conduit comprises a first end connected to the opening and a second end disposed in proximity to the VFD. A predefined length of the conduit at the first end is elevated by a predefined angle from a longitudinal axis of the opening.

In one or more embodiments, the conduit comprises a first end connected to the opening and a second end disposed of in proximity to the VFD, wherein at least a section of the conduit between the first end and the second end is flexible.

In one or more embodiments, the conduit is configured to restrict entry of water towards the second end of the conduit and allow automated discharge of water from the conduit through the opening.

In one or more embodiments, the first end of the conduit is secured at the opening by a clamp provided on an interior side of the opening.

In one or more embodiments, the system comprises a grill cover adapted to be removably coupled to the opening and/or the first end of the conduit, wherein a first end of the grill cover is adapted to be attached to the outer body of the vehicle and a second end of the grill cover is adapted to be attached to the first end of the conduit.

In one or more embodiments, the first end of the grill cover comprises a mesh having a plurality of pores, wherein the pores have a predefined profile and a predefined pore size that enables the mesh to allow entry of the ambient air within the conduit and restrict entry of outside objects and/or living organisms within the conduit.

In one or more embodiments, the second end of the grill cover comprises a collar of a predefined length protruding from a surface of the mesh, wherein the collar is adapted to be attached and locked with the first end of the conduit upon attaching the grill cover on the opening.

In one or more embodiments, the first end or the mesh of the grill cover has a profile corresponding to a profile of the opening and the collar of the grill cover has a profile corresponding to a profile of the first end of the conduit.

In one or more embodiments, the grill cover is adapted to be snap-fitted to the outer body of the vehicle.

In one or more embodiments, the first end of the grill cover comprises one or more engaging elements adapted to engage and lock with the outer body of the vehicle.

In one or more embodiments, the grill cover is an integral part of the outer body of the vehicle.

In one or more embodiments, the grill cover is made of a material used for the outer body of the vehicle.

In one or more embodiments, the system comprises an air filter disposed within the conduit and/or attached to the grill cover to clean the ambient air entering the conduit. the conduit is made of a material selected from one or more of a plastic, polymer, fiber, and steel.

In one or more embodiments, the system comprises a flap movably configured at the first end of the conduit or the opening, the flap is adapted to move between a closed position and an open position, and wherein, when the vehicle moves and/or an external fan associated with the VFD turns ON, the airflow automatically moves the flap to the open position, thereby opening the opening and allowing the ambient air to flow within the conduit, and when the vehicle is stationary, the flap automatically moves to the closed position and covers the opening.

In one or more embodiments, the vehicle comprises a transport refrigeration unit (TRU) coupled to a transportation cargo, wherein the VFD is operatively coupled to a compressor of a refrigeration system and/or one or more fans associated with the TRU.

In one or more embodiments, the VFD is positioned within a chassis on one side of a cabinet of the TRU such that the VFD remains thermally separated from an engine of the TRU, and wherein the opening is provided at the outer body of the cabinet on the VFD side.

In one or more embodiments, the opening is provided at an outer surface of a door of the cabinet, and the VFD is positioned within a chassis of the cabinet on the door side such that the VFD remains thermally separated from an engine of the TRU.

In one or more embodiments, the opening is provided at the outer body at front of the cabinet and the VFD is positioned within the cabinet such that the VFD remains in thermally separated an engine of the TRU.

In one or more embodiments, the conduit extends between an inlet or an air grill associated with a condenser of the TRU, and the VFD is positioned at the second predefined position within the cabinet, wherein the conduit is configured to direct the flow of air from the condenser to the VFD for cooling the VFD. The flow of air to cool VFD can come from inlet to the condenser or from outlet to the condenser.

The foregoing summary is illustrative only and is not intended to be in any way limiting. In addition to the illustrative aspects, embodiments, and features described above, further embodiments of the invention will become more apparent from the following description taken in conjunction with the drawings.

### BRIEF DESCRIPTION OF THE DRAWINGS

The accompanying drawings are included to provide a further understanding of the subject disclosure of this invention and are incorporated in and constitute a part of this specification. The drawings illustrate exemplary embodiments of the invention and, together with the description, serve to explain the principles of the invention.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1A illustrates an exemplary internal view of the cooling system for VFD of a transport refrigeration unit (TRU), without the outer body/panel or grill cover over the TRU in accordance with one or more embodiments of the disclosure.
FIG. 1B illustrates an exemplary view of the cooling system of FIG. 1A, wherein a grill cover is attached over the opening, and the outer body of the TRU in accordance with one or more embodiments of the disclosure.
FIG. 1C illustrates an exemplary view depicting the outer body of FIG. 1B having the grill cover attached over the opening provided on the outer body of the TRU in accordance with one or more embodiments of the disclosure
FIGs. 2A to 2C illustrate exemplary views of the conduit used in the cooling system of the TRU in accordance with one or more embodiments of the disclosure.
FIGs. 3A to 3E illustrate exemplary views of the grill cover of the cooling system of the TRU in accordance with one or more embodiments of the disclosure.

### DETAILED DESCRIPTION

The following is a detailed description of embodiments of the invention depicted in the accompanying drawings. The embodiments are in such detail as to clearly communicate the invention. However, the amount of detail offered is not intended to limit the anticipated variations of embodiments; on the contrary, the intention is to cover all modifications, equivalents, and alternatives falling within the scope of the subject invention as defined by the appended claims.

Various terms are used herein. To the extent a term used in a claim is not defined below, it should be given the broadest definition persons in the pertinent art have given that term as reflected in printed publications and issued patents at the time of filing.

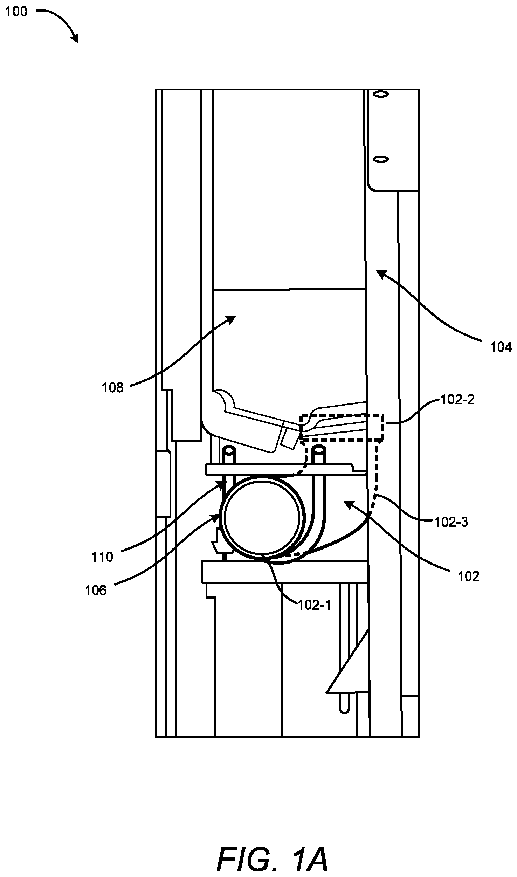

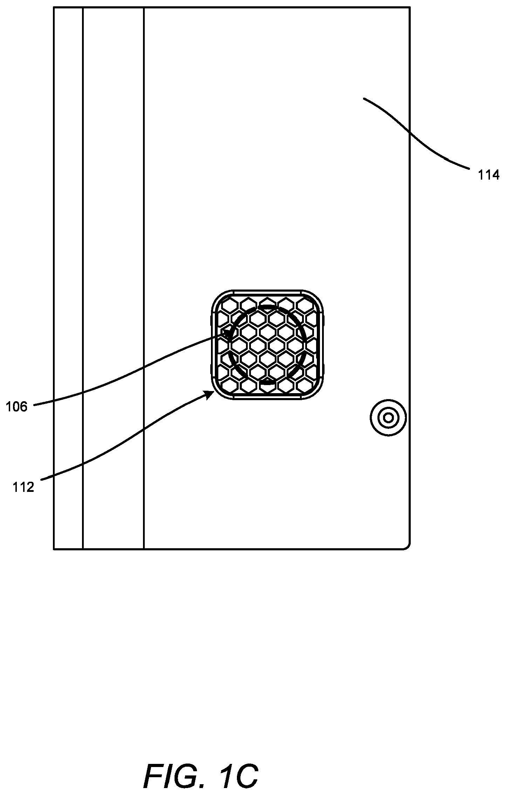

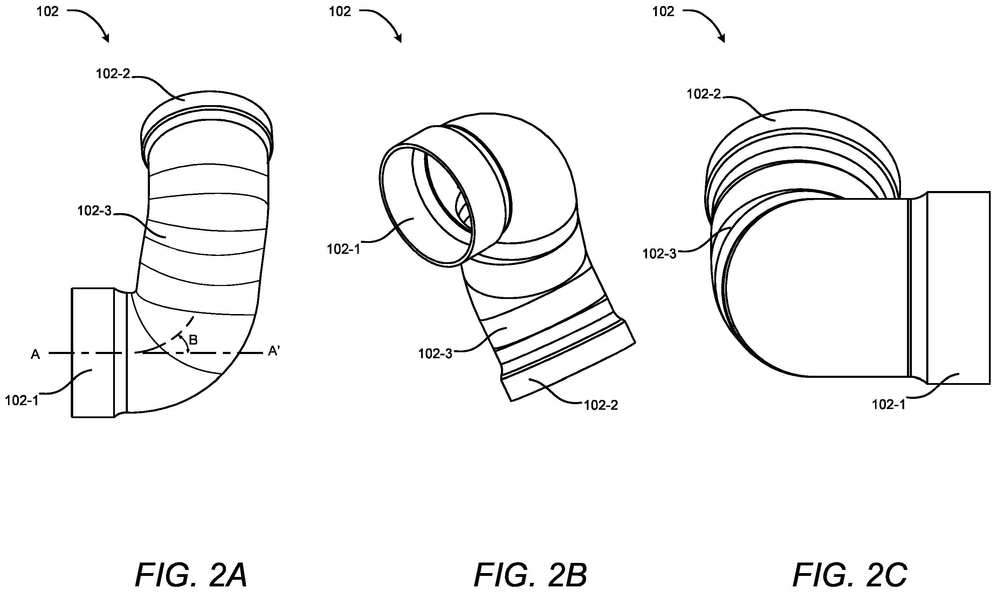

Referring to FIG. 1A to 1C, an exemplary embodiment of the cooling system 100 for a variable frequency drive (VFD 108) and internal components of a transport refrigeration unit (TRU) or a vehicle is disclosed. The transport refrigeration unit includes a trailer refrigeration unit, a container refrigeration unit, a truck refrigeration unit, and the like. The TRU includes a cabinet being configured with a transportation cargo and the VFD 108 is associated with a compressor of a refrigeration system and/or one or fans associated with the TRU. The system 100 includes a conduit 102 as shown in FIGs. 2A to 2C being disposed within a chassis 104 of the cabinet of the TRU, such that the conduit 102 extends between a opening 106 provided at a first predefined position on the outer body 114 of the TRU and the VFD 108 being positioned internally within the body 104 of the TRU. A first end 102-1 of the conduit 102 is adapted to be connected to the opening 106 and a second end 102-2 of the conduit 102 is disposed in proximity to the VFD 108. The second end 102-2 may be at an inlet side of the fan associated with the internal cooling system of the VFD 108. In other embodiments, an external fan can be provided on the door or first end of the conduit 102, thereby eliminating the requirement of an internal fan or internal cooling system for the VFD 108. The external fan at the door or duct serves the same purpose of cooling VFD with colder ambient air, by enabling the inflow of colder ambient air within the conduit 102 and directing the colder ambient air to the VFD to facilitate cooling of the VFD 108. Further, in one or more embodiments, a section 102-3 of the conduit 102 between the first end 102-1 and the second end 102-1, or the complete conduit 102 may be flexible, which allows easier positioning of the conduit 102 within the chassis 104 of the TRU. Thus, the opening 106 provided on the outer body 114 of the TRU facilitates the inflow of ambient air within the conduit 102 that carries the ambient air towards the VFD 108, thereby providing fresher lower ambient temperature air to the VFD 108 to maintain the VFD 108 at a safe operable temperature. In addition, the VFD 108 can be positioned at a second predefined position within the TRU such that the VFD 108 remains close to ambient and/or at a safe distance from an engine of the TRU such that the VFD remains thermally separated from the heat generated by the engine so as to minimize the transfer of heat from the engine to the VFD, thereby enabling quick and efficient cooling of the VFD 108.

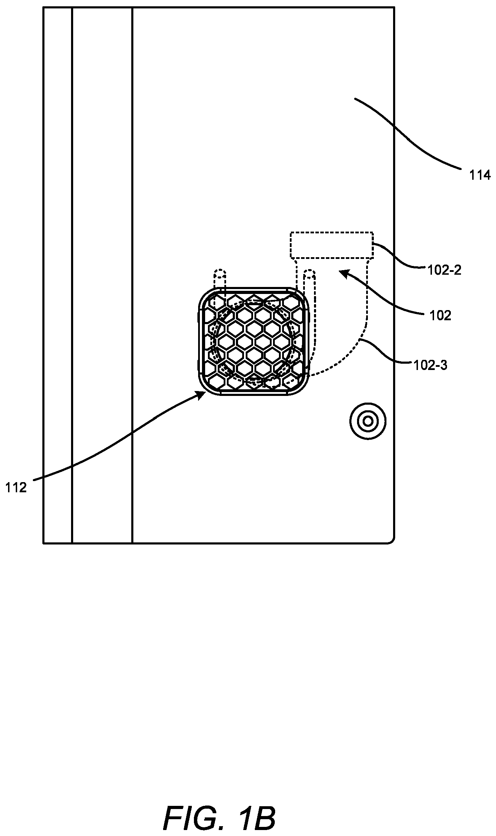

In some embodiments, the VFD 108 is positioned within the chassis on one side of the cabinet of the TRU, however, at a safe distance from the engine such that the VFD remains thermally separated from the engine to minimize the transfer of heat from the engine to the VFD. Further, the opening 106 is provided at the outer body 114 of the cabinet on the side where the VFD 108 is disposed. In other embodiments, the opening 106 is provided at the outer surface of the door 114 of the cabinet, and the VFD 108 is positioned within chassis 104 of the cabinet on the door side of the TRU such that the VFD 108 remains thermally separated from the heat generated by the engine. In another embodiment, the opening 106 is provided at the outer body 114 in front of the cabinet, and the VFD 108 is positioned within the cabinet, however, the VFD 108 must be disposed away or at a safe distance from the engine of the TRU to reduce the effect of heat generated by the engine on the TRU. In addition, the conduit 102 may also extend between an air grill (not shown) or an inlet associated with a condenser of the TRU and the VFD 108 may be positioned within the cabinet of the TRU. This allows the conduit 102 or system 100 to directly receive ambient air from the air grill of the condenser and/or from the condenser. Thus, the cooling system or conduit 102 allows either the flow of ambient air from outside or cool air from the condenser inlet towards the VFD 108 to maintain the VFD 108 at a desired temperature. Similarly, the VFD 108 can also be positioned at other positions within the TRU, however, at a safe distance from the engine of the TRU, to minimize any effect from the heat of the engine on the VFD 108. In one or more embodiments, the system 100 includes a clamp 110, preferably having a U-shaped profile as shown in FIGs 1A and 1B, being positioned at the interior side of the opening 106 to hold the first end 102-1 of the conduit 102 at the opening 106. However, the clamp of other designs or profiles may also be implemented in the cooling system 100. The clamp 110 facilitates easier opening of the door as required to allow serviceability or maintenance of the VFD 108 or conduit 102. In addition, clamp 110 also allows easier fitting or alignment of the grill cover 112 on the duct or conduit 102. Further, the rest of portions 102-2, 102-3 of the conduit 102 can extend within the chassis 104 of the TRU through a duct (not shown) extending between the opening 106 and the VFD 108.

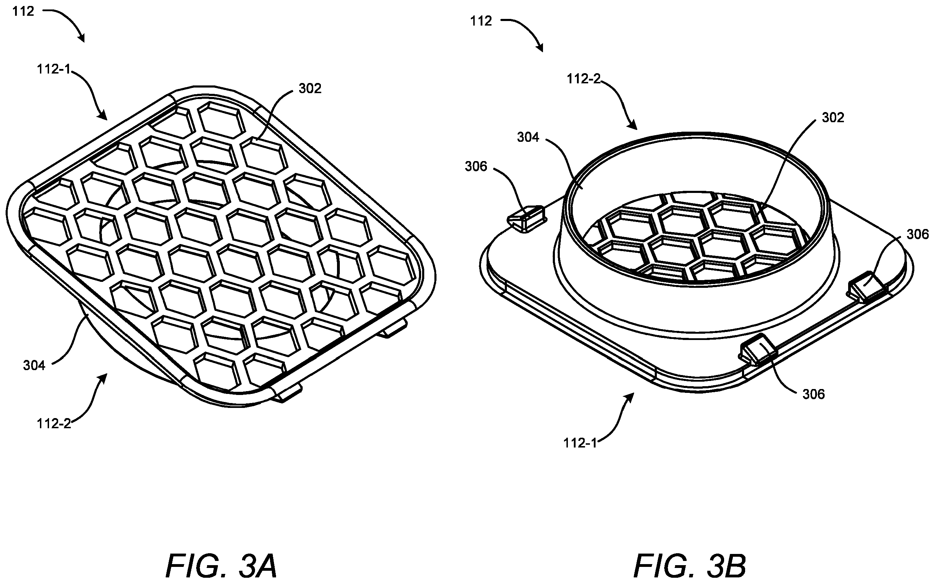

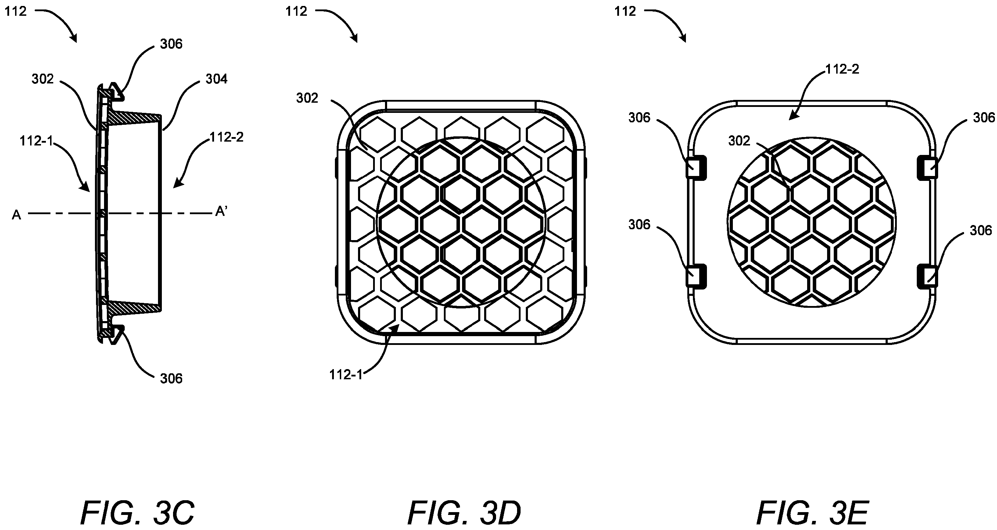

The system 100 includes a grill cover 112 as illustrated in FIGs 3A to 3E, that is adapted to be removably coupled to the opening 106 and/or the first end 102-1 of the conduit 102. A first end 112-1 of the grill cover 112 is adapted to be attached to the outer body 114 of the TRU and a second end 112-2 of the grill cover 112 is adapted to be attached to the first end of the conduit 102. The first end 112-1 of the grill cover 112 may have a profile corresponding to a profile of the opening 106 and the second end 112-2 of the grill cover 112 may have a profile corresponding to a profile of the first end 102-1 of the conduit 102, which enables attachment of the second end 112-2 of the grill cover 112 to the first end 102-1 of the conduit 102 upon attaching the grill cover 112 on the outer body 114 or opening 106 of the TRU.

The first end 112-1 of the grill cover 112 includes a mesh 302 having a plurality of pores. The pores may have a predefined profile and a predefined pore size that enables the mesh 302 to allow entry of the ambient air within the conduit 102 and restrict the entry of outside objects and/or living organisms within the conduit 102. For example, the pores of the grill cover 112 can have a honeycomb profile, circular profile, or polygonal profile, but are not limited to the like. Further, the second end 112-2 of the grill cover 112 includes a collar 304 of a predefined length protruding from the surface of the mesh 302. The collar 304 can be a cylindrical protrusion of a predetermined diameter and length, such that the collar 304 gets attached and locked with the first end 102-1 of the conduit 102 upon attaching the grill cover 112 to the opening 106. In one or more embodiments (now shown), the grill cover 112 may be a louvered vent cover that facilitates air flow through a fixture that incorporates slanted pieces, which also the entry of outside objects, water, and/or living organisms within the conduit 102. Similarly, a grill cover having slant edges or other vent styles may also be configured with the opening and first end of the conduit 102.

An interior side of the first end 112-1 of the grill cover 112 includes one or more engaging elements 306 (collectively referred to as engaging elements 306, herein) that are adapted to engage and lock with grooves (not shown) provided around the opening 106 on the outer body 114 of the TRU, thereby allowing easier attachment on and/or removal of the grill cover 112 from the outer body 114 of the TRU. In one embodiment, the grill cover 112 can be adapted to be snap-fitted to the outer body 114 of the TRU. In another embodiment, the grill cover 112 can be an integral part of the outer body 114 of the TRU. The grill cover 112 may preferably be made of the same material as the outer body 114 of the TRU to enhance the aesthetics of the TRU, however, the grill cover 112 may also be made of a different material. In one or more embodiments, the door is removably coupled to the chassis of the cabinet, which facilitates easier removal of the door as required to allow serviceability or maintenance of the VFD 108. In addition, this also allows easier fitting of the grill cover 112, the conduit 102, and the clamp 110 with the TRU. Further, the conduit 102 is made of a material selected from one or more of plastic, polymer, fiber, and steel, but not limited to the like.

In one or more embodiments, the system 100 includes an air filter (not shown) disposed within the conduit 102 and/or attached to the grill cover 112 to clean the ambient air entering the conduit 102, which decreases degradation of the VFD 108 or internal components of the TRU. According to the invention, as shown in FIG. 2A, a predefined length of the conduit 102 at the first end 102-1 is elevated by a predefined angle (B) from a longitudinal axis (A-A') of the opening 106 to restrict the entry of water towards the second end 102-2 of the conduit 102 and allow automated discharge of water from the conduit 102 through the opening 106 or first end of the conduit 102. The conduit 102 may either extend upward or downward within the body of the cabinet. Further, a flap (not shown) can be movably configured at the first end of the conduit 102 or the opening 106, such that when the vehicle moves or when the external fan at the door or inlet of conduit 102 is turned ON, the ambient air automatically may move the flap to an open position, thereby opening the opening 106 and allowing the colder ambient air to flow within the conduit 102 and cool the VFD 108. Further, when the vehicle is stationary or when the external fan is tuned OFF, the flap automatically moves back to the closed position and covers the opening 106. Thus, the system 100 restricts the entry of outside objects, water, and/or living organisms within the conduit 102, thereby preventing the VFD 108 and other internal components of the TRU from weathering and degradation.

While various embodiments of this invention have been elaborated for a conduit having a circular cross-section, and the grill cover and the opening having a specific shape, however, the conduits, grill cover, and opening can also be of other shapes, sizes, and profiles. In addition, while embodiments of this invention have been elaborated for a cooling system for the VFD of a transport refrigeration unit (TRU), however, the cooling system can also be configured with any vehicle where external or ambient cooling is required.

Thus, this invention (system) overcomes the drawbacks, limitations, and shortcomings associated with existing technologies by providing an external and efficient cooling system for the VFD in a transport refrigeration unit or a vehicle to provide fresher lower ambient temperature air to the VFD to maintain the VFD at a safe operable temperature.

While the invention has been described with reference to exemplary embodiments, it will be understood by those skilled in the art that various changes may be made without departing from the scope of the invention as defined by the appended claims. Modifications may be made to adopt a particular situation or material to the teachings of the invention without departing from the scope thereof. Therefore, it is intended that the invention not be limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A cooling system (100) for a variable frequency drive (VFD) (108) of a vehicle, the cooling system comprising:
a conduit (102) disposed within the vehicle and extending between an opening (106) provided at a first predefined position on an outer body (114) of the vehicle and the VFD (108) being positioned at a second predefined position within the vehicle,
wherein,
the opening (106) facilitates inflow of ambient air within the conduit (102); and
the conduit (102) directs the ambient air towards the VFD (108) to enable cooling of the VFD (108), **characterized in that**
the conduit (102) comprises a first end (102-1) connected to the opening (106) and a second end (102-2) disposed in proximity to the VFD (108), and wherein a predefined length of the conduit (102) at the first end (102-1) is elevated by a predefined angle (B) from a longitudinal axis (A) of the opening (106).

2. The cooling system (100) of claim 1, wherein at least a section (102-3) of the conduit (102) between the first end (102-1) and the second end (102-2) is flexible.

3. The cooling system (100) of claim 1 or 2, wherein the conduit (102) is configured to restrict entry of water towards the second end (102-2) of the conduit and allow automated discharge of water from the conduit through the opening (106).

4. The cooling system (100) of claim 2 or 3, wherein the first end (102-1) of the conduit (102) and/or a grill cover (112) are secured at the opening (106) by a clamp (110) provided at an interior side of the opening.

5. The cooling system (100) of claim 2 or 3 or wherein the cooling system comprises a grill cover (112) adapted to be removably coupled to the opening (106) and/or the first end (102-1) of the conduit (102), or the cooling system of claim 4 wherein the grill cover (112) is adapted to be removably coupled to the opening (106) and/or the first end (102-1) of the conduit (102); and wherein a first end (112-1) of the grill cover (112) is adapted to be attached to the outer body (114) of the vehicle and a second end (112-2) of the grill cover (112) is adapted to be attached to the first end (102-1) of the conduit (102).

6. The cooling system (100) of claim 5, wherein the first end (112-1) of the grill cover (112) comprises a mesh (302) having a plurality of pores, wherein the pores have a predefined profile and a predefined pore size that enables the mesh to allow entry of the ambient air within the conduit (102) and restrict entry of outside objects and/or living organisms within the conduit (102).

7. The cooling system (100) of claim 5 or 6, wherein the second end (112-2) of the grill cover (112) comprises a collar (304) of a predefined length protruding from a surface of the mesh (302), wherein the collar (304) is adapted to be attached and locked with the first end (102-1) of the conduit (102) upon attaching the grill cover (112) on the opening (106).

8. The cooling system (100) of claim 5, 6 or 7, wherein the first end (112-1) or the mesh (302) of the grill cover (112) has a profile corresponding to a profile of the opening (106) and the collar (304) of the grill cover (112) has a profile corresponding to a profile of the first end (102-1) of the conduit (102).

9. The cooling system (100) of any of claims 5 to 8, wherein the grill cover (112) is adapted to be snap-fitted to the outer body (114) of the vehicle; and/or wherein the first end (112-1) of the grill cover (112) comprises one or more engaging elements (306) adapted to engage and lock with the outer body (114) of the vehicle.

10. The cooling system (100) of claim 5, wherein the grill cover (112) is an integral part of the outer body (114) of the vehicle; and/or wherein the grill cover (112) is made of a material used for the outer body (114) of the vehicle.

11. The cooling system (100) of any of claims 5 to 10, wherein the cooling system (100) comprises an air filter disposed within the conduit (102) and/or in the VFD (108) and/or attached to the grill cover (112) to clean the ambient air entering the conduit (102).

12. The cooling system (100) of any preceding claim, wherein the conduit (102) is made of a material selected from one or more of plastic, polymer, rubber, fiber, and steel.

13. The cooling system of any preceding claim, wherein the cooling system (100) comprises a flap movably configured at the first end (102-1) of the conduit (102) or the opening (106), the flap is adapted to move between a close position and an open position, and
wherein,
when the vehicle moves and/or an external fan associated with the VFD (108) turns ON, the airflow automatically moves the flap to the open position, thereby opening the opening (106) and allowing the ambient air to flow within the conduit (102), and
when the vehicle is stationary or when VFD fan is OFF, the flap automatically moves to the closed position and covers the opening.

14. The cooling system (100) of any preceding claim, wherein the cooling system is configured to be disposed within a vehicle comprising a transport refrigeration unit (TRU) coupled to a transportation cargo, and wherein the VFD (108) is operatively coupled to a compressor of a refrigeration system and/or one or more fans associated with the TRU.

15. The cooling system (100) of claim 14, the cooling system being configured to be disposed within a vehicle wherein:
the VFD (108) is positioned within a chassis (104) on one side of a cabinet of the TRU such that the VFD (108) remains thermally separated from an engine of the TRU, and wherein the opening (106) is provided at the outer body (114) of the cabinet on the VFD side; or
the opening (106) is provided at an outer surface of a door of the cabinet and the VFD (108) is positioned within a chassis (104) of the cabinet on the door side such that the VFD (108) remains thermally separated from an engine of the TRU; or
the opening (106) is provided at the outer body (114) at a front of the cabinet and the VFD (108) is positioned within the cabinet such that the VFD remains thermally separated from an engine of the TRU; or
the conduit (102) extends between an inlet or an air grill associated with a condenser of the TRU and the VFD (108) is positioned at the second predefined position within the cabinet, wherein the conduit is configured to direct the flow of air from inlet or outlet of the condenser to the VFD (108) for cooling the VFD (108).

## Patentansprüche

1. Kühlsystem (100) für einen frequenzvariablen Antrieb (VFD) (108) eines Fahrzeugs, wobei das Kühlsystem Folgendes umfasst:
eine Leitung (102), die innerhalb des Fahrzeugs angeordnet ist und sich zwischen einer Öffnung (106), die an einer ersten vordefinierten Position an einer Außenhaut (114) des Fahrzeugs bereitgestellt ist, und dem VFD (108), der an einer zweiten vordefinierten Position innerhalb des Fahrzeugs positioniert ist, erstreckt,
wobei,
die Öffnung (106) das Einströmen von Umgebungsluft in die Leitung (102) erleichtert; und
die Leitung (102) die Umgebungsluft in Richtung des VFD (108) lenkt, um eine Kühlung des VFD (108) zu ermöglichen, **dadurch gekennzeichnet, dass** die Leitung (102) ein erstes Ende (102-1), das mit der Öffnung (106) verbunden ist, und ein zweites Ende (102-2), das in der Nähe des VFD (108) angeordnet ist, umfasst, und wobei eine vordefinierte Länge der Leitung (102) am ersten Ende (102-1) um einen vordefinierten Winkel (B) von einer Längsachse (A) der Öffnung (106) angehoben ist.

2. Kühlsystem (100) nach Anspruch 1, wobei mindestens ein Abschnitt (102-3) der Leitung (102) zwischen dem ersten Ende (102-1) und dem zweiten Ende (102-2) flexibel ist.

3. Kühlsystem (100) nach Anspruch 1 oder 2, wobei die Leitung (102) dazu konfiguriert ist, den Eintritt von Wasser in Richtung des zweiten Endes (102-2) der Leitung zu begrenzen und einen automatischen Abfluss von Wasser aus der Leitung durch die Öffnung (106) zuzulassen.

4. Kühlsystem (100) nach Anspruch 2 oder 3, wobei das erste Ende (102-1) der Leitung (102) und/oder eine Gitterabdeckung (112) an der Öffnung (106) durch eine an einer Innenseite der Öffnung bereitgestellte Klammer (110) befestigt sind.

5. Kühlsystem (100) nach Anspruch 2 oder 3, oder wobei das Kühlsystem eine Gitterabdeckung (112) umfasst, die dazu ausgelegt ist, abnehmbar mit der Öffnung (106) und/oder dem ersten Ende (102-1) der Leitung (102) gekoppelt zu werden, oder das Kühlsystem nach Anspruch 4, wobei die Gitterabdeckung (112) dazu ausgelegt ist, abnehmbar mit der Öffnung (106) und/oder dem ersten Ende (102-1) der Leitung (102) gekoppelt zu werden; und wobei ein erstes Ende (112-1) der Gitterabdeckung (112) dazu ausgelegt ist, an der Außenhaut (114) des Fahrzeugs befestigt zu werden, und ein zweites Ende (112-2) der Gitterabdeckung (112) dazu ausgelegt ist, am ersten Ende (102-1) der Leitung (102) befestigt zu werden.

6. Kühlsystem (100) nach Anspruch 5, wobei das erste Ende (112-1) der Gitterabdeckung (112) ein Gitter (302) umfasst, das eine Vielzahl von Poren aufweist, wobei die Poren ein vordefiniertes Profil und eine vordefinierte Porengröße aufweisen, die es dem Gitter ermöglichen, den Eintritt der Umgebungsluft in die Leitung (102) zuzulassen und den Eintritt von äußeren Objekten und/oder lebenden Organismen in die Leitung (102) zu beschränken.

7. Kühlsystem (100) nach Anspruch 5 oder 6, wobei das zweite Ende (112-2) der Gitterabdeckung (112) einen Kragen (304) mit einer vordefinierten Länge umfasst, der von einer Oberfläche des Gitters (302) vorsteht, wobei der Kragen (304) dazu ausgelegt ist, beim Befestigen der Gitterabdeckung (112) an der Öffnung (106) mit dem ersten Ende (102-1) der Leitung (102) befestigt und verriegelt zu werden.

8. Kühlsystem (100) nach Anspruch 5, 6 oder 7, wobei das erste Ende (112-1) oder das Gitter (302) der Gitterabdeckung (112) ein Profil aufweist, das einem Profil der Öffnung (106) entspricht, und der Kragen (304) der Gitterabdeckung (112) ein Profil aufweist, das einem Profil des ersten Endes (102-1) der Leitung (102) entspricht.

9. Kühlsystem (100) nach einem der Ansprüche 5 bis 8, wobei die Gitterabdeckung (112) dazu ausgelegt ist, an der Außenhaut (114) des Fahrzeugs eingerastet zu werden; und/oder wobei das erste Ende (112-1) der Gitterabdeckung (112) ein oder mehrere Eingriffselemente (306) umfasst, die dazu ausgelegt sind, mit der Außenhaut (114) des Fahrzeugs in Eingriff gebracht und verriegelt zu werden.

10. Kühlsystem (100) nach Anspruch 5, wobei die Gitterabdeckung (112) ein integraler Bestandteil der Außenhaut (114) des Fahrzeugs ist; und/oder wobei die Gitterabdeckung (112) aus einem Material hergestellt ist, das für die Außenhaut (114) des Fahrzeugs verwendet wird.

11. Kühlsystem (100) nach einem der Ansprüche 5 bis 10, wobei das Kühlsystem (100) einen Luftfilter umfasst, der innerhalb der Leitung (102) und/oder im VFD (108) angeordnet und/oder an der Gitterabdeckung (112) befestigt ist, um die in die Leitung (102) einströmende Umgebungsluft zu reinigen.

12. Kühlsystem (100) nach einem der vorhergehenden Ansprüche, wobei die Leitung (102) aus einem Material hergestellt ist, das aus einem oder mehreren von Kunststoff, Polymer, Gummi, Faser und Stahl ausgewählt ist.

13. Kühlsystem nach einem der vorhergehenden Ansprüche, wobei das Kühlsystem (100) eine Klappe umfasst, die beweglich am ersten Ende (102-1) der Leitung (102) oder der Öffnung (106) konfiguriert ist, wobei die Klappe dazu ausgelegt ist, sich zwischen einer geschlossenen Position und einer offenen Position zu bewegen, und
wobei,
wenn sich das Fahrzeug bewegt und/oder ein mit dem VFD (108) verbundenes externes Gebläse eingeschaltet wird, der Luftstrom die Klappe automatisch in die offene Position bewegt, wodurch die Öffnung (106) geöffnet wird und die Umgebungsluft innerhalb der Leitung (102) strömen kann, und
wenn das Fahrzeug steht oder das VFD-Gebläse ausgeschaltet ist, sich die Klappe automatisch in die geschlossene Position bewegt und die Öffnung abdeckt.

14. Kühlsystem (100) nach einem der vorhergehenden Ansprüche, wobei das Kühlsystem dazu konfiguriert ist, innerhalb eines Fahrzeug angeordnet zu sein, das eine Transportkühleinheit (TRU) umfasst, die mit einer Transportladung gekoppelt ist, und wobei der VFD (108) mit einem Kompressor eines Kühlsystems und/oder einem oder mehreren Gebläsen wirkgekoppelt ist, die mit der TRU assoziiert sind.

15. Kühlsystem (100) nach Anspruch 14, wobei das Kühlsystem dazu konfiguriert ist, innerhalb eines Fahrzeug angeordnet zu sein, wobei:
der VFD (108) innerhalb eines Chassis (104) auf einer Seite eines Gehäuses der TRU derart positioniert ist, dass der VFD (108) thermisch von einem Motor der TRU getrennt bleibt, und wobei die Öffnung (106) an der Außenhaut (114) des Gehäuses auf der VFD-Seite bereitgestellt ist; oder
die Öffnung (106) an einer Außenfläche einer Tür des Gehäuses bereitgestellt ist und der VFD (108) innerhalb eines Chassis (104) des Gehäuses auf der Türseite derart positioniert ist, dass der VFD (108) thermisch von einem Motor der TRU getrennt bleibt; oder
die Öffnung (106) an der Außenhaut (114) auf einer Vorderseite des Gehäuses bereitgestellt ist und der VFD (108) innerhalb des Gehäuses derart positioniert ist, dass der VFD thermisch von einem Motor der TRU getrennt bleibt; oder
die Leitung (102) sich zwischen einem Einlass oder einem Luftgitter erstreckt, der/das mit einem Kondensator der TRU assoziiert ist, und der VFD (108) an der zweiten vordefinierten Position innerhalb des Gehäuses positioniert ist, wobei die Leitung dazu konfiguriert ist, den Luftstrom vom Einlass oder Auslass des Kondensators zum VFD (108) zu leiten, um den VFD (108) zu kühlen.

## Revendications

1. Système de refroidissement (100) pour un entraînement à fréquence variable (VFD) (108) d'un véhicule, le système de refroidissement comprenant :
un conduit (102) disposé à l'intérieur du véhicule et s'étendant entre une ouverture (106) fournie à une première position prédéfinie sur une carrosserie extérieure (114) du véhicule et le VFD (108) étant positionné à une deuxième position prédéfinie à l'intérieur du véhicule,
dans lequel,
l'ouverture (106) facilite l'entrée d'air ambiant dans le conduit (102) ; et
le conduit (102) dirige l'air ambiant vers le VFD (108) pour permettre le refroidissement du VFD (108), **caractérisé en ce que** le conduit (102) comprend une première extrémité (102-1) reliée à l'ouverture (106) et une seconde extrémité (102-2) disposée à proximité du VFD (108), et dans lequel une longueur prédéfinie du conduit (102) à la première extrémité (102-1) est élevée d'un angle prédéfini (B) par rapport à un axe longitudinal (A) de l'ouverture (106).

2. Système de refroidissement (100) selon la revendication 1, dans lequel au moins une section (102-3) du conduit (102) entre la première extrémité (102-1) et la deuxième extrémité (102-2) est flexible.

3. Système de refroidissement (100) selon la revendication 1 ou 2, dans lequel le conduit (102) est configuré pour restreindre l'entrée d'eau vers la deuxième extrémité (102-2) du conduit et permettre l'évacuation automatisée de l'eau du conduit à travers l'ouverture (106).

4. Système de refroidissement (100) selon la revendication 2 ou 3, dans lequel la première extrémité (102-1) du conduit (102) et/ou un couvercle de grille (112) sont fixés à l'ouverture (106) par une pince (110) fournie sur un côté intérieur de l'ouverture.

5. Système de refroidissement (100) selon la revendication 2 ou 3, ou dans lequel le système de refroidissement comprend un couvercle de grille (112) adapté pour être couplé de manière amovible à l'ouverture (106) et/ou à la première extrémité (102-1) du conduit (102), ou le système de refroidissement selon la revendication 4, dans lequel le couvercle de grille (112) est adapté pour être couplé de manière amovible à l'ouverture (106) et/ou à la première extrémité (102-1) du conduit (102) ; et dans lequel une première extrémité (112-1) du couvercle de grille (112) est adaptée pour être fixée à la carrosserie extérieure (114) du véhicule et une deuxième extrémité (112-2) du couvercle de grille (112) est adaptée pour être fixée à la première extrémité (102-1) du conduit (102).

6. Système de refroidissement (100) selon la revendication 5, dans lequel la première extrémité (112-1) du couvercle de grille (112) comprend une maille (302) comportant une pluralité de pores, dans lequel les pores ont un profil prédéfini et une taille de pore prédéfinie qui permettent à la maille de laisser entrer de l'air ambiant dans le conduit (102) et de restreindre l'entrée d'objets extérieurs et/ou d'organismes vivants dans le conduit (102).

7. Système de refroidissement (100) selon la revendication 5 ou 6, dans lequel la deuxième extrémité (112-2) du couvercle de grille (112) comprend un collier (304) d'une longueur prédéfinie faisant saillie d'une surface de la maille (302), dans lequel le collier (304) est adapté pour être fixé et verrouillé avec la première extrémité (102-1) du conduit (102) lors de la fixation du couvercle de grille (112) sur l'ouverture (106).

8. Système de refroidissement (100) selon la revendication 5, 6 ou 7, dans lequel la première extrémité (112-1) ou la maille (302) du couvercle de grille (112) a un profil correspondant à un profil de l'ouverture (106) et le collier (304) du couvercle de grille (112) a un profil correspondant à un profil de la première extrémité (102-1) du conduit (102).

9. Système de refroidissement (100) selon l'une quelconque des revendications 5 à 8, dans lequel le couvercle de grille (112) est adapté pour être fixé par encliquetage à la carrosserie extérieure (114) du véhicule ; et/ou dans lequel la première extrémité (112-1) du couvercle de la grille (112) comprend un ou plusieurs éléments de contact (306) adaptés pour entrer en contact avec et se verrouiller avec la carrosserie extérieure (114) du véhicule.

10. Système de refroidissement (100) selon la revendication 5, dans lequel le couvercle de grille (112) fait partie intégrante de la la carrosserie extérieure (114) du véhicule ; et/ou dans lequel le couvercle de grille (112) est fabriqué dans un matériau utilisé pour la la carrosserie extérieure (114) du véhicule.

11. Système de refroidissement (100) selon l'une quelconque des revendications 5 à 10, dans lequel le système de refroidissement (100) comprend un filtre à air disposé dans le conduit (102) et/ou dans le VFD (108) et/ou fixé au couvercle de grille (112) pour nettoyer l'air ambiant entrant dans le conduit (102).

12. Système de refroidissement (100) selon une quelconque revendication précédente, dans lequel le conduit (102) est fait d'un matériau choisi parmi un ou plusieurs plastiques, polymères, caoutchoucs, fibres et aciers.

13. Système de refroidissement selon l'une quelconque des revendications précédentes, dans lequel le système de refroidissement (100) comprend un volet configuré de façon mobile au niveau de la première extrémité (102-1) du conduit (102) ou de l'ouverture (106), le volet étant adapté pour se déplacer entre une position fermée et une position ouverte, et dans lequel ,
lorsque le véhicule se déplace et/ou qu'un ventilateur externe associé au VFD (108) se met en marche, le flux d'air déplace automatiquement le volet en position ouverte, ouvrant ainsi l'ouverture (106) et permettant à l'air ambiant de circuler dans le conduit (102), et
lorsque le véhicule est à l'arrêt ou lorsque le ventilateur VFD est éteint, le volet se ferme automatiquement et couvre l'ouverture.

14. Système de refroidissement (100) selon une qeulconque revendication précédente, dans lequel le système de refroidissement est configuré pour être disposé à l'intérieur d'un véhicule comprenant une unité de réfrigération de transport (TRU) couplée à une cargaison de transport, et dans lequel le VFD (108) est fonctionnellement couplé à un compresseur d'un système de réfrigération et/ou à un ou plusieurs ventilateurs associés à la TRU.

15. Système de refroidissement (100) selon la revendication 14, le système de refroidissement étant configuré pour être disposé à l'intérieur d'un véhicule dans lequel :
le VFD (108) est positionné à l'intérieur d'un châssis (104) sur un côté d'une armoire de la TRU de manière à ce que le VFD (108) reste thermiquement séparé d'un moteur de la TRU, et dans lequel l'ouverture (106) est fournie sur la carrosserie extérieure (114) de l'armoire du côté du VFD ; ou
l'ouverture (106) est fournie sur une surface extérieure d'une porte de l'armoire et le VFD (108) est positionné à l'intérieur d'un châssis (104) de l'armoire du côté de la porte, de sorte que le VFD (108) reste thermiquement séparé d'un moteur de la TRU ; ou
l'ouverture (106) est fournie au niveau de la carrosserie extérieure (114) à l'avant de l'armoire et le VFD (108) est positionné à l'intérieur de l'armoire de sorte que le VFD reste thermiquement séparé d'un moteur de la TRU ; ou
le conduit (102) s'étend entre une entrée ou une grille d'air associée à un condenseur de la TRU et le VFD (108) est positionné à la deuxième position prédéfinie dans l'armoire, dans lequel le conduit est configuré pour diriger le flux d'air de l'entrée ou de la sortie du condenseur vers le VFD (108) pour refroidir le VFD (108).
